(19) Europäisches Patentamt / European Patent Office / Office européen des brevets

(11) **EP 4 261 511 A1**

(12) **EUROPEAN PATENT APPLICATION**

(43) Date of publication:
**18.10.2023 Bulletin 2023/42**

(21) Application number: **22168538.1**

(22) Date of filing: **14.04.2022**

(51) International Patent Classification (IPC):
**G01K 17/10** (2006.01)        **G06Q 50/06** (2012.01)
**G06Q 10/06** (2023.01)

(52) Cooperative Patent Classification (CPC):
**G01K 17/10; G06Q 50/06**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Kamstrup A/S
8660 Skanderborg (DK)**

(72) Inventor: **Rasmussen, Morten Karstoft
8660 Skanderborg (DK)**

(74) Representative: **Patentanwälte Vollmann Hemmer
Lindfeld
Partnerschaft mbB
Wallstraße 33a
23560 Lübeck (DE)**

(54) **NETWORK MONITORING METHOD AND HEAT DISTRIBUTION NETWORK**

(57)    The invention refers to a network monitoring method for monitoring a heat distribution network comprising a plurality of interconnected distribution lines (6) having forward pipes (8) and return pipes (10) and comprising at least one pressure sensor ($P_1$, $P_2$) detecting a pressure in a distribution line (6), comprising the following steps: detecting a forward pressure ($P_f$) at a predefined location in one of the forward pipes (8), detecting a return pressure ($P_r$) at a predefined location in one of the return pipes, calculating at least one differential pressure ($P_{f,r}$) between at least two nodes (F, R) of the distribution network on basis of the detected forward pressure ($P_f$) and the detected return pressure ($P_r$). Furthermore, the invention refers to a heat distribution network configured for carrying out this method.

Fig. 1

EP 4 261 511 A1

**Description**

The invention refers to a network monitoring method for monitoring a heat distribution network and a respective heat distribution network.

EP 3 531 368 A1 discloses a method for analyzing a utility distribution network like a water or heat distribution network. In this system meters are used at the points of consumption to determine for example an amount of heat or volume of water delivered. For analyzing the condition of the network and monitoring the network according to this system it is known to determine flow rate and/or temperature at selected positions in the network.

It is the object of the present invention to further improve the monitoring of a heat distribution network to detect supply bottle necks and unsatisfactory service conditions in the network.

This object is achieved by a network monitoring method having the features defined in claim 1 and by a heat distribution network having the features defined in claim 16. Preferred embodiments are defined in the dependent subclaims, the following description and the accompanying drawings.

The network monitoring method according to the invention is provided for monitoring a heat distribution network. The heat distribution network comprises heat meters and a plurality of interconnected distribution lines, which distribution lines have forward pipes and return pipes. Furthermore, the interconnected distribution lines comprise at least one pressure sensor detecting a pressure in a distribution line. According to the invention there is detected a forward pressure at a predefined location in one of the forward pipes and there is detected a return pressure at a predefined location in one of the return pipes. The location at which the forward pressure is detected preferably is close to the location where the return pressure is detected. However, it is possible that the locations for detecting the forward pressure and the return pressure are distanced from one another. Furthermore, flow rate and/or fluid temperature information are received from at least one heat meter. According to the invention there is calculated at least one differential pressure between two nodes of the distribution network, i.e. for a pair of nodes. These nodes or pairs of nodes may be characteristic points or locations for which it is desired to know the differential pressure. The differential pressure is calculated on basis of the detected forward pressure and the detected return pressure and on basis of the received flow rate and/or temperature information. Preferably the differential pressure is calculated for many pairs of nodes in the distribution network to monitor the differential pressure at characteristic or critical pair of nodes in the network. The first pressure sensor is placed in or connected to the forward pipe, whereas the second sensor is connected to or placed in the return pipe. These two sensors are placed at strategically wise positions and at an accessible place in the distribution network. Preferably they are placed close to each other and at the same elevation. Preferably these pressure sensors measure either an absolute pressure compared to vacuum or they may measure a relative pressure relative to atmospheric pressure.

Preferably, there is arranged a plurality of heat meters in the network, in particular one heat meter at each point of consumption for detecting the heat consumption. The heat meters are configured to record meter data and to transfer these meter data to a central control device. This may be done by a direct communication link and/or via relay devices. In particular other heat meters may function as a relay device to transmit meter data to the central control device. The meter data may include the flow rate or flow volume and the temperature detected in the forward pipe and the return pipe at the position of the heat meter. These are values which are detected for calculating the heat consumption. Additional fluid temperature and/or flow sensors may be placed in the network. Preferably it is possible to detect or derive flow and fluid temperature for each node in the network. This allows to consider the temperature for determining a derived pressure, in particular the temperature influence on the density of the heat transfer medium flowing in the network. In a special embodiment a first and/or a second pressure sensor may be integrated in at least some of the heat meters, too. However, it is also possible to place first and/or second pressure sensors at desired positions in the network as separate pressure sensors.

The invention has the advantage that not only are the differential pressures between the main distribution pipes identified but also the differential pressures in service connection pipes. Service connection pipes are the pipes with smaller diameter that are branched off from the main distribution pipes and are connected to e.g. residential houses. Obtaining information about the differential pressure at these remote - when seen from the heating works - but important service points has been a challenge but is solved by including flowrate and/or fluid temperature information provided by at least one, preferably a plurality of heat meters. Inclusion of these data in the hydraulic model calculations provides a more robust model and higher confidence in the calculation results. Also, the differential pressure in the service connections can now be controlled in more detail. Preferably, the heat meters provide both forward temperature and return temperature information, thus also information about the delta T, the difference temperature at the point of heat consumption. Preferably a difference temperature (delta T) monitoring is combined with a differential pressure monitoring. This combination gives a particularly interesting picture of the condition of a heat distribution network and enables the identification of points of heat consumption where there is low differential pressure and low differential temperature. A low differential pressure at a point of consumption can be an indication of a too high fluid return temperature from the heat consumer. The district heating utility companies desire to avoid high return temperatures and low delta T.

Preferably the nodes of the network are to be considered as points of the network. For software-calculation purposes the forward pipe and the return pipe may be divided in the software into a number of nodes. For example, a node may be a point where the pipe splits into two pipes or a point where a valve connects two pipes. However, the node may be any point or section of interest in the network.

Calculating the differential pressure for at least one, preferably many pairs of nodes of the distribution networks allows to monitor the differential pressure in the network to detect regions or pairs of nodes in the network having a too low differential pressure which for example may result in a reduced heat supply or in increased losses in the network.

In a possible embodiment there may be determined a derived forward pressure in at least one or more nodes on the basis of the detected forward pressure and the topology of the heat distribution network. Then said differential pressure is calculated on basis of the derived forward pressure. This method allows to calculate differential pressures for many nodes in the network without the need of placing pressure sensors in each node. By use of the known topology or detected topology of the network, it is possible to calculate a pressure loss from the location of the pressure sensor to the selected node. By use of this pressure loss it is possible to determine the derived pressure for a desired node in the network. The topology may be calculated or measured in advance, stored and used for determining the derived pressure later. For determining the derived forward pressure and/or the derived return pressure, additionally flow and/or fluid temperature data are considered which preferably are detected by at least one heat meter in the heat distribution network.

According to a further embodiment there is determined a derived return pressure in at least one or more node on basis of the detected return pressure and the topology of the heat distribution network. Then, the differential pressure is calculated on basis of this derived return pressure. Preferably a derived forward pressure and a derived return pressure are determined for the same node or nodes adjacent to one another. Thus, preferably it is possible to determine or calculate a differential pressure for essentially any node or location in the network on basis of a pressure measurement carried out by at least one forward and one return pressure sensor. Preferably, there are arranged several first pressure sensors, i. e. forward pressure sensors, and second pressure sensors, i.e. return pressure sensors, in the network. However, preferably there are many more nodes present than pressure sensors arranged in the network. This allows to calculate the differential pressure for a plurality of pairs of nodes on basis of a limited number of pressure sensors.

For determining the derived forward pressure and the derived return pressure, the same topology data may be used. However, to have a more accurate determination it is possible to provide separate topology data for the forward pipes and for the return pipes.

Preferably for each calculation of a differential pressure first and second pressure sensors which are arranged adjacent to one another, substantially at the same location, are used. Thereby it is possible to use a derived forward pressure and a derived return pressure on basis of the sensor data and from these sensors to calculate the differential pressure for a desired pair of nodes distanced from the location of the first and second pressure sensor. However, it would also be possible to calculate a derived forward pressure and a derived return pressure on the basis of sensor data received from a first and a second sensor arranged at different locations in the network, i.e. not adjacent to each other. By use of the topology information it is possible to calculate a differential pressure for any desired pair of nodes, i.e. nodes substantially the same in the forward pipe and return pipe on basis of those first and second sensors arranged at different locations in the network.

According to a further embodiment, the at least one calculated differential pressure is compared to a limit value, i.e. a limit differential pressure. Further preferably an action is initiated if the differential pressure is below the limit value defining a threshold for the differential pressure. The action for example may be an alarm or control of a pump or valve. The alarm may signalize a problem to an operator, whereas the control of a pump or valve for example may allow to automatically compensate or eliminate the too low differential pressure to ensure a desired heat supply in the network.

In a further preferred embodiment several differential pressures calculated or determined in the aforementioned way are grouped for adjacent nodes. This may be done for example graphically or in a number of clusters. This allows the utility service personal to quickly identify when something in the network is wrong. For example, if several end users have the same problem, then likely there is an error in the distribution network and not a singular error at one of the end users.

Further preferably, said differential pressure for at least one pair of nodes, preferably the differential pressures for several or many nodes, are calculated in a repetitive manner for the same pair of nodes and stored over time, wherein the limit value is calculated on basis of the stored differential pressure values. For example, the differential pressure may be stored over a long time, for example weeks, months or years and a reference value may for example be calculated as an average over time. When the current differential pressure calculated differs significantly from the reference value, for example the average over a certain time, then an action may be taken, for example an alarm or graphical sign may be given. This allows a control system to learn the good settings over time and automatically give an alarm or initiate regulation of a pump and/or valve if the current differential pressure calculated deviates from a reference value, in particular an average over a longer time. This may facilitate the job of a service technician and a necessary corrective action in the network can be taken much faster because of a preferred monitoring in real time.

As mentioned before, preferably the derived forward pressure and/or the derived return pressure are determined for many nodes and preferably a differential pressure, which is calculated on basis of the derived forward and derived return pressures, is determined for many pairs of nodes, preferably for each node, representing the entire heat distribution network. A heat distribution network for example may be sectioned in many nodes, for example between 100 and 100.000 nodes dependent on the geographical extension of the network and the number of end users connected to the distribution network. On basis of these nodes, it is possible to monitor the differential pressure in the entire distribution network to detect malfunctions or bottle necks in the system. By determining the derived pressure values and calculating the differential pressure on basis of these derived forward and derived return pressures it is in particular possible to identify those nodes and service points in the distribution network having unsatisfactory service conditions like too low differential pressure, which are in the middle of the distribution network, i. e. far away from the points of consumption where respective sensors and meters are placed which allow to directly monitor hydraulic values at the point of consumption.

According to a further possible embodiment the derived forward and/or return pressures and/or in particular the calculated differential pressures in several nodes and/or pairs of nodes along the distribution lines, in particular along all distribution lines, are visualized in a map of the heat distribution network. This allows to create a graphical map showing the differential pressures and the development of differential pressures in the network. In particular too low differential pressures can directly be identified in such visualization. For example, regions or pairs of nodes with a too low differential pressure, i.e. a differential pressure below a limit value, may be shown in a different color or for example flashing or in another way graphically signalizing this unsatisfactory service condition.

The aforementioned topology or topology data of the heat distribution network preferably include information on the hydraulic characteristics or resistance of the pipes, in particular length and cross sections and/or material of the pipes of the distribution lines and/or a geodetic elevation profile of the distribution lines, wherein the topology of the network preferably is determined by use of a sensor unit traveling through the heat distribution network and collecting data, for example about one or more of sound level, acceleration, velocity and pH value. These data in particular may be an indicator for properties of the pipes, like size and material for example. All these criteria like pipe material type, insulation material or isolation values, pipe wall thickness, size, length and elevation of the pipes are influencing the pressure loss over the extension of the distribution lines. Therefore, all these data are collected as a topology description of the network, either in advance in knowledge of the configuration of the network and the pipes used, or by measurement. A measuring device may be traveling through the network together with the fluid therein and detecting for example noise, movement, acceleration etc. on basis of which the shape and condition of the pipe can be detected. The elevation may be in particular the elevation over a reference height, in particular over sea level. Furthermore, in the topology data the age of the pipes, number of bends or corners in the pipes, the cross section of the pipes, used isolation material and all other criteria influencing the pressure loss over length may be included The relevant data for the entire network may be stored in a storage device so that by using of this topology data the differential pressure can be calculated for all nodes in the network on the basis of the measured pressure at one location in the forward and in the return pipe.

Said elevation profile of the distribution lines according to a preferred embodiment is obtained from online map data available on the internet, for example google maps, which map data are superimposed which a map of the heat distribution network. By this in particular the height of the nodes over a reference level, for example sea level can be integrated into the map of the heat distribution network, i.e. the topology of the heat distribution network used for determining the derived pressure values. Instead of taking the relevant elevation data from available data from the internet it would be possible to determine the data by measurement or from the initial configuration of the distribution network. By use of the elevation profile it is possible to display the absolute height of the different points or nodes of the network.

As already explained before, preferably for determining the derived forward pressure and/or the derived return pressure in the heat distribution network, a pressure loss along the heat distribution lines is calculated. This is the pressure loss along the distance starting from the location of the pressure sensor and ending at the node for which the derived pressure should be determined. Thus, the derived pressure for each node is determined on basis of the calculated pressure loss and the absolute pressure detected by a pressure sensor, i.e. a first or second pressure sensor at the predefined location. The pressure loss calculation can also only relate to a part of the pipe. Thus, a pressure loss can be calculated in forward direction of the forward pressure pipe by determining the pressures in two subsequent nodes and then subtracting the two pressures from each other. For a more precise determination of the derived pressures, it may be possible to calculate the pressure loss starting from different pressure sensors and ending at the same node.

Preferably, supply bottle necks in the heat distribution networks or locations of unsatisfactory service conditions, respectively, are identified on basis of the derived forward and/or return pressure and/or on basis of the calculated differential pressure between the nodes, i.e. at the pairs of nodes, along the distribution lines, preferably in all pairs of nodes along the distribution lines. The calculated differential pressure may be calculated on basis of the derived forward and return pressures, as explained above. In particular if the detected or calculated differential pressure is below a threshold, this indicates a problem for the heat distribution.

According to a further special embodiment at least one detected pressure, i. e. a forward pressure and/or a return pressure, and/or at least one derived pressure, i.e. a derived forward and/or return pressure, and/or the at least one calculated differential pressure are compensated by a reference to a geodetic reference height. For this a reference level is determined. This for example may be sea level. However, it is also possible to define another reference level. For example, in high buildings there is the problem that in the upper floor there is another absolute height as in the first floor. For the calculation of the differential pressures as explained above, the elevation data refer to the distribution pipes of the network and may disregard the height of a connected building. For this it is possible to compensate the calculated differential pressure at certain nodes by a compensation factor. By this the calculated differential pressure is reduced to ensure a sufficient differential pressure at this node sufficient for the highest floor of the building. This means that the calculated value is reduced to the value which would be achieved in the upper floor of the building.

According to a further possible embodiment the detected forward pressure and the detected return pressure are averaged over a predetermined time, for example several hours, and then used as average detected forward pressures and average detected return pressures for further calculation of the at least one differential pressure. By the use of these average values short-term variations are disregarded.

According to a further possible embodiment the information about a differential temperature at a point of consumption is obtained from a heat meter and combined with information about the differential pressure at the same point. This allows to more precisely monitor the condition of the network.

Besides the network monitoring method as described above, a heat distribution network is subject of the present invention. The essential features and preferred embodiments of such a heat distribution network are described in the following. It has to be understood that preferred embodiments and preferred features of the method as described above, have to be regarded as preferred embodiments and preferred features of the heat distribution network, too. Vice versa, preferred features and preferred embodiments described in the following with reference to the heat distribution network should be regarded as preferred embodiments of the network monitoring method, too.

The heat distribution network comprises a plurality of interconnected distribution lines having forward pipes and return pipes for a fluid flow of a heat transfer medium and comprises heat meters. The network comprises at least one pressure sensor detecting a pressure in a distribution line. In particular, there is at least one first pressure sensor at a predefined location in one of the forward pipes. This at least one first pressure sensor is configured for detecting a forward pressure in the forward pipe at the location of this first pressure sensor. Furthermore, there is at least one second pressure sensor at a predefined location in one of the return pipes. This at least one second pressure sensor is configured for detecting a return pressure at the respective location in the return pipe. The heat distribution network further comprises a control device which is connected to the at least one first and the at least one second sensor such that sensor data measured by the respective sensors are transmitted to the control device. There may be a direct communication link between each sensor and the control device, which may be a wired and/or wireless communication link. Alternatively or in addition, an indirect communication using relay devices can be established. In particular, other components or devices in the network can act as relay stations. Furthermore, the data may be processed in certain devices before transmitting them to the control device. For example, there may be a sensor control unit collecting the sensor data and transmitting processed sensor data towards the central control device.

The heat distribution network comprises a plurality of heat meters detecting the heat consumption at the points of consumption, e. g. houses or factories supplied by the heat distribution network. The heat meters are connected to said control device for data communication. The control device is configured for collecting the meter data communicated from the heat meters. The communication may be a wired or preferably a wireless communication. Furthermore, the connection may be a direct connection or an indirect connection with further devices and in particular relay devices in between. The connection for data communication is such that meter data are transmitted to said control device, which preferably is a central control device controlling and monitoring the entire heat distribution network or at least a part of the heat distribution network. The collected meter data in particular comprise fluid temperature and/or fluid flow rate.

The control device is configured for calculating at least one differential pressure in at least one pair of nodes of the distribution network on basis of the detected forward pressure, the detected return pressure and the detected fluid flow rate and/or fluid temperature. This may be a differential pressure at the location of the first and the second pressure sensor, which in a preferred embodiment may be placed adjacent to each other, i.e. at positions in the return pipe and the forward pipe which are close to one another. However, it is also possible to calculate the differential pressure on basis of pressure values detected by pressure sensors located at different locations in the network. The calculated differential pressure can be used as an indicator for problems or failures in the supply of heat transfer medium. In particular, the control device may be configured to compare the calculated differential pressure with a reference value and to signalize a problem if the calculated differential pressure is below this threshold, as explained above. The control device may be a central control device receiving all the data, fluid temperature and/or flow rate, pressure data from the network and doing all the calculations of the differential pressures. However, there may be more than one control device and the differential pressures may be calculated in different control devices which are configured to transmit the calculated differential pressures to a further higher level control which is configured for monitoring the entire network or at least a portion of the network.

According to a further embodiment the control device comprises storage means storing topology data representing the topology of the heat distribution network. These may be topology data as described above with reference to the network monitoring method. Furthermore, the control device according to this embodiment is configured such that it determines at least one derived forward pressure and/or at least one derived return pressure in one or more pairs of nodes within said heat distribution network on the basis of the detected forward and/or the return pressure, the fluid flow rate and/or the fluid temperature and said topology data stored in said storage means. The control device preferably determines the derived return pressure and the derived forward pressure as described above with reference to the network monitoring method.

Preferably, the control device is configured such that the at least one differential pressure is calculated on basis of the derived forward pressure and/or the derived return pressure. This allows to calculate a differential pressure for different pairs of nodes in the network without the need to place pressure sensors in the respective nodes.

In a further embodiment said topology data stored in the storage means comprise an elevation profile of the distribution lines and/or said control device or include a communication interface connected to the internet and being configured such that it obtains said elevation profile or elevation data of the distribution lines from online map data available on the internet. Furthermore, the control device is configured such that it superimposes the elevation profile or elevation data with a map of the heat distribution network which has been stored in the storage means before. This allows in particular to add data referring to the height of the different nodes to a map of the distribution network. Instead of obtaining said elevation data from the internet or other available geographical data, it would be possible to make a measurement, for example by a sensor unit traveling with the fluid through the pipe network and recording elevation data.

In a special embodiment there is provided a sensor device comprising at least one first pressure sensor and at least one second pressure sensor as described. This means the first pressure sensor and the second pressure sensor are integrated into one sensor device. This sensor device is in hydraulic connection with both a forward pipe and a return pipe, such that the first pressure sensor is in hydraulic connection with a forward pipe and the second pressure sensor is in hydraulic connection with the return pipe. There may be a connection of the sensor device with the forward and the return pipe or the sensor device may be integrated into the forward and the return pipe. Furthermore, the sensor device preferably comprises a sensor control unit connected to the first and second pressure sensor and communicatively connected to the control device described above such that the sensor control unit can transmit sensor data from the first and second sensor to the control unit, in particular a central control unit. In a preferred embodiment the differential pressure may be calculated by the sensor control unit and transmitted to the control device via a communication link. The embodiment just described has the advantage that the first and second pressure sensors are synchronized in time by the sensor control unit when measuring, and that the differential pressure can be calculated locally and then sent to the control device.

According to a further possible embodiment the heat meter, preferably a plurality of heat meters, has a pressure detection arrangement to detect a forward pressure in the forward pipe and/or a return pressure in the return pipe of a service connection pipe. The service connection pipe is a pipe connected to a point of consumption. Said pressure detection arrangement preferably includes a pressure sensor integrated in the heat meter or including an electronic interface in the heat meter connectable to a stand-alone pressure sensor. Thus, the data communication unit of the heat meter can be used to transfer pressure values towards a control device, too. Furthermore, by this integration of the pressure measurement into the heat meter it is easily possible to integrate a plurality of pressure sensors into the network preferably without additional installation efforts.

In the following the invention is described by way of example with reference to the accompanying drawings. In these:

Fig. 1    schematically shows a heat distribution network,

Fig. 2    schematically shows the elevation of a heat distribution network,

Fig. 3    shows a visualization of the differential pressure in a heat distribution network,

Fig. 4    shows a different view of visualization of the differential pressure in a heat distribution network according to figure 3,

Fig. 5    shows an enlarged view of the pressure diagram shown in figure 4.

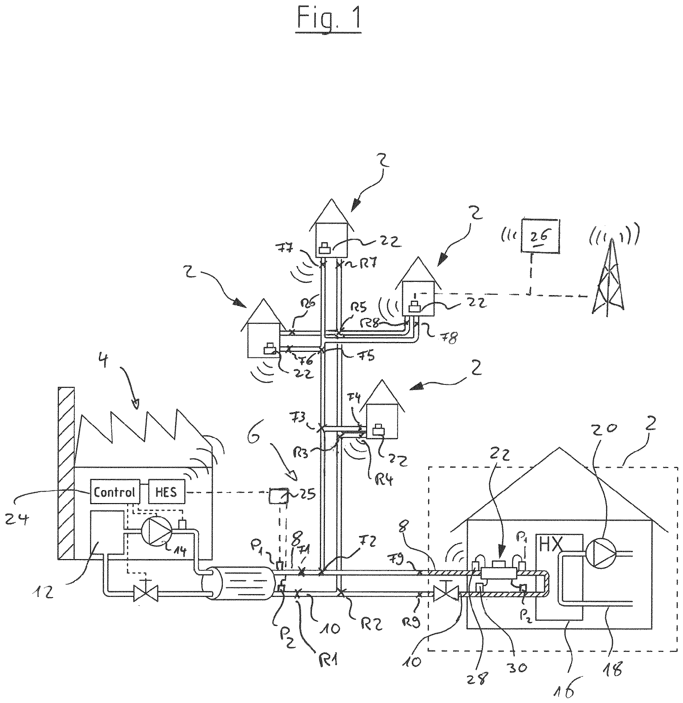

Figure 1 shows a heat distribution network in a simplified manner. It is an example for a district heating network for supplying consumer sites 2 with heat from a heating plant 4. The consumer sites or points of consumption 2 are connected to the heating plant 4 by distribution lines 6, wherein the distribution lines 6 comprise forward pipes 8 and return pipes 10. The consumer sites 2 may be private households, industrial consumers or any other type of consumer site. The distribution lines 6 are simplified examples. In reality, the network is much more complex and comprises many consumer sites 2. Heat is transferred via the distribution lines 6 by use of a heat transfer medium circulating in the distribution lines 6, i. e. flowing through the forward pipes 8 and back to the heating plant 4 via the return pipes 10. In the heating plant 4 there is at least one heat source 12 and a pumping device 14 for producing the flow. At each consumer site or point of consumption 2, as shown in one enlarged example, there may be provided a heat exchanger 16 for transferring heat to an internal heating circuit 18 of the consumer site 2. The internal heating circuit 18 comprises a pump 20 for circulating a heat transfer medium inside the internal heating circuit 18. At each consumer site 2 there is provided a heat meter 22 configured to measure the heat consumption of the consumer site 2 and to report the heat consumption by transferring consumption data to a control device 24 at the heating plant 4. In this example the heat meters 22 are provided for a wireless communication with the control device 24. However, instead of a direct wireless communication a cellular communication network may be used or the heat meters 22 may be connected to a concentrator having a wired or wireless data connection to the heat meters 22. Furthermore, there may be relay devices between the heat meter 22 and the control device 24, in particular other heat meters 22 may work as relay devices. All these possible data communication links may be realized alternatively or in combination.

The heat meters 22 are configured in known manner comprising a flow sensor and temperature sensors 28 and 30 detecting a forward temperature entering the consumer site 2 and a return temperature 30 leaving the consumer site 2. The heat meters 22 are placed on service pipe connections which are smaller pipes than the main distribution pipes. From the forward and return temperature a difference temperature delta T can be calculated. This would correspond to the temperature difference between nodes F9 and R9 in Figure 1. A low differential pressure between F9 and R9 can be an indication of too low delta T.

For detecting a reference pressure, a first pressure sensor $P_1$ measuring a forward pressure is arranged in a forward pipe and a second pressure sensor $P_2$ measuring the return pressure is placed in the return pipe. The two sensors $P_1$ and $P_2$ are placed at strategically wise positions and at an accessible place in the distribution network. Furthermore, they are placed close to each other and at the same elevation. These pressure sensors $P_1$ and $P_2$ measure either an absolute pressure compared to vacuum or they may measure a relative pressure relative to atmospheric pressure. It has to be understood that many first pressure sensors $P_1$ and second pressure sensors $P_2$ may be arranged in similar manner at different locations in the network. For example, it may be possible to introduce respective first and second pressure sensors $P_1$ and $P_2$ at consumer sites 2 or to integrate into the heat meter 22. The first and second pressure sensors $P_1$ and $P_2$ transfer pressure data to the control device 24 preferably via a wireless communication link or via any other suitable connection. If the pressure sensors $P_1$ and $P_2$ are integrated or connected to the heat meter 22, the pressure data may be transmitted together with the other meter data.

The first pressure sensor $P_1$ and the second pressure sensor $P_2$ may be integrated into a sensor device connected to the forward pipe 8 and the return pipe 10 and having a sensor control unit 25 receiving the sensor data from the first pressure sensor $P_1$ and $P_2$ and transmitting the sensor data to the control device 24. Furthermore, a differential pressure may be calculated within the sensor control unit 25.

For software-calculation purposes the forward pipe 8 and the return pipes 10 are sectioned into a number of nodes $F_1$, $F_2$, ....$F_9$, $F_i$ and $R_1$, $R_2$, ....$R_9$, $R_i$, wherein the nodes $F_1$ to $F_9$ are placed in the forward pipe 8 and the nodes $R_1$ to $R_9$ are nodes in the return pipe 10. For example, a node in the forward pipe 8 is of point $F_2$ where the forward pipe splits into further forward pipes. In the return pipe the node $R_2$ for example is a node where two return pipes are connected. In reality the number of nodes used for calculation in the network and to cover the entire network is typically between 100 and 100.000 dependent on the geographical extension of the network and the number of metering points, i. e. points of consumption 2. The lowest number of nodes, in the simplest and straight forward pipe format, preferably corresponds to the number of consumer sites 2. A node is a single point in the distribution network, such as a point on a pipe. A pressure value, such as P = 2,34 bar, is related to a node. In between two nodes there is a pipe section and the pressure difference between the two nodes corresponds to the pressure loss in that pipe section. In the example of Figure 1 there are always corresponding nodes in the forward pipe 8 and in the return pipe 10, wherein the corresponding nodes preferably are adjacent or close to one another. This allows to calculate differential pressures for the respective nodes. For example, node $F_2$ in the forward pipe is close to node $R_2$ in the return pipe, node $F_3$ in the forward pipe is close to node $R_3$ in the return pipe, and so on.

According to the invention there are calculated differential pressures in the network to monitor the network. The differential pressure may be calculated directly between the pressure values detected by the first pressure sensor $P_1$ and the second pressure sensor $P_2$ arranged at the same location, for example at the heat plant 4 or in a heat meter 22. To analyze and monitor the differential pressure in the entire network, derived pressures are calculated for all the nodes $F_1$ to $F_9$ and $R_1$ to $R_9$ and then differential pressures are calculated for each of the nodes, i.e. each of the pairs of nodes defined by a node $F_i$ in the forward pipe and an adjacent or corresponding node $R_i$ in the return pipe. The derived pressures $P_{f,i}$ and $P_{r,i}$ are determined on basis of the referential pressures detected by the first pressure sensors $P_1$ and the second pressure sensors $P_2$, for example by the following equation:

$$(1) \qquad P_{f,i} = P_{f,i-1} + \rho g h_{i-1,i} + \Delta P_{i-1,i} + P_f$$

wherein ($\Delta P =$) $\Delta P_{i-1,i}$ is calculated on the basis of equation:

$$(2) \qquad \frac{\Delta P}{l} = \frac{1}{2}\rho v^2 \cdot f$$

wherein,

P$_{f,i}$      is the derived pressure at node in the forward direction [N/m$^2$]
$\rho$      is the density of the fluid (the density is dependent on the temperature of the fluid) [g/cm3]
g      is the gravity acceleration [m/s2]
h$_i$      is the elevation of node .i above or below a reference level, such as the elevation above or below sea level [m]
$\Delta P_{i-1,i}$      is the pressure loss along the pipe connecting nodes i-1 and i in the forward flow direction and calculated by way of equation (2)
I      is the length of the pipe connecting nodes i and i-1
v      is flow rate [m/s] of the heat transfer medium calculated by the heat meter
f      is a friction coefficient
P$_f$      is the pressure measured by a pressure sensor P$_f$ at node .i in the forward pipe

For each node $R_1$ to $R_9$ in the return pipe 10 the absolute pressure $P_{ri}$ is derived in corresponding manner on basis of a pressure $P_r$ measured by pressure sensor $P_2$. Thus, for calculating the absolute pressure $P_{f,i}$ at the nodes $F_1$ to $F_9$ in the forward pipe 8 and the absolute pressures $P_{r,i}$ at the nodes $R_1$ to $R_9$ in the return pipe 10 the pressure loss starting from the first pressure sensor $P_1$ and the second pressure sensor $P_2$ is calculated and added or subtracted from the pressure values detected by the first pressure sensor $P_1$ and the second pressure sensor $P_2$ depending on whether the node $F_1$ to $F_9$ or $R_1$ to $R_9$ is upstream or downstream of the location of the pressure sensors $P_1$ and $P_2$. By these equations it is possible to set up a model of the entire network in a matrix notation and such a model can be formalized and solved in the following manner:

$$(3) \quad \mathbf{A}_f \bullet P_f = b_f$$

wherein A$_f$ is an adjacency matrix describing the topology of the concerned distrbibution network. This topology is stored in a storage device in the control device 24. P$_f$ is a vector containing the forward pressure at all network nodes and b$_f$ is a vector with constants reflecting the terms as described in the above pressure model. This system of equations can be solved numerically, in order to calculate the forward pressure everywhere in the network:

$$(4) \qquad P_f = \mathbf{A}_f^{-1} \bullet \ b_f$$

A corresponding equation is set up for the return pipe 10 such that it is possible to calculate the return pressure everywhere in the network:

$$(5) \qquad P_r = \mathbf{A}_r^{-1} \bullet b_r$$

wherein P$_R$ is a vector containing the return pressure at all network nodes and b$_r$ is a vector with constants reflecting the terms as described in the above pressure model but adapted for the return pipe.
On basis of these pressures for all nodes $F_1$ to $F_9$ and $R_1$ to $R_9$ or pairs of nodes, respectively, a pressure difference is calculated between two nodes:

$$(6) \qquad \Delta P_{f,r,i} = P_{f,i} - P_{r,i}$$

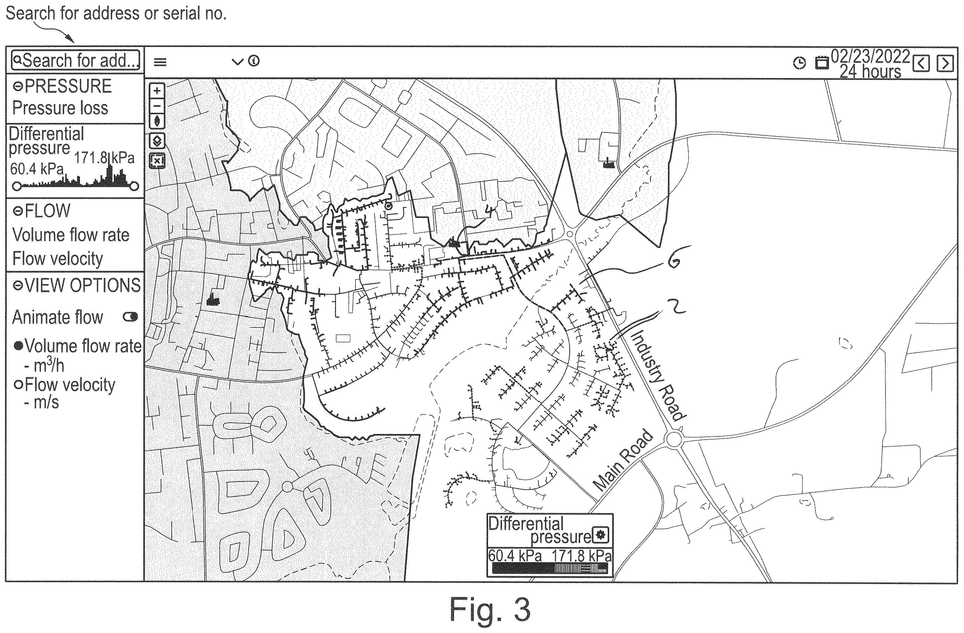

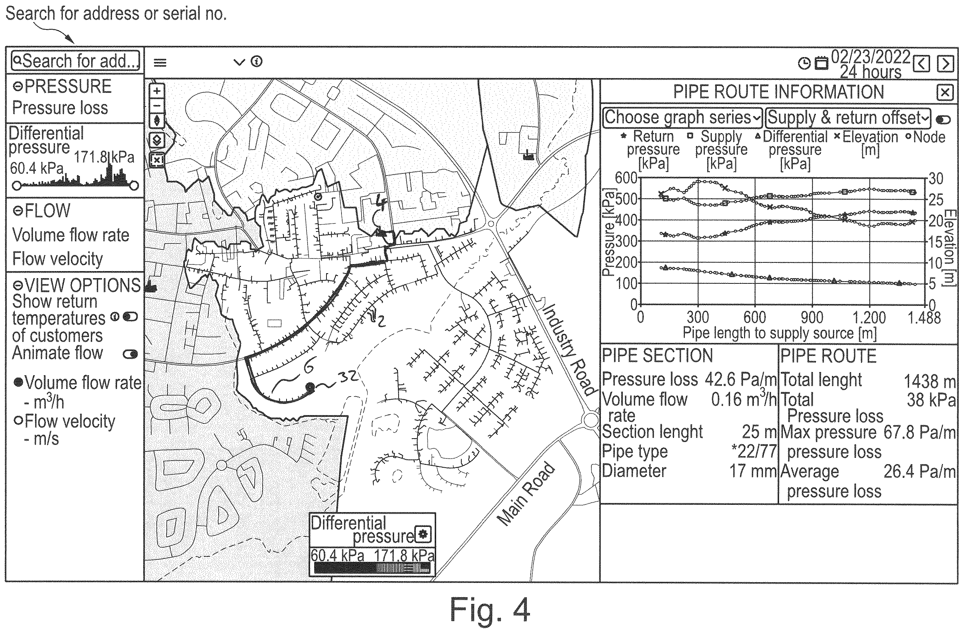

wherein $\Delta P_{f,r,i}$ is a differential pressure between two nodes, preferably between two adjacent nodes defining a pair of nodes. All these differential pressures may be visualized grafically on a computer screen as shown in figures 3 and 4 and explained in detail below.
$\Delta P_{f,r,i}$ is a differential pressure between the forward pipe 8 and the return pipe 10 at the node i. To ensure a sufficient supply of heat transfer medium though the network, the differential pressure must be high enough to for example drive the heat transfer medium through the heat exchanger 16 at the consumer site 2.

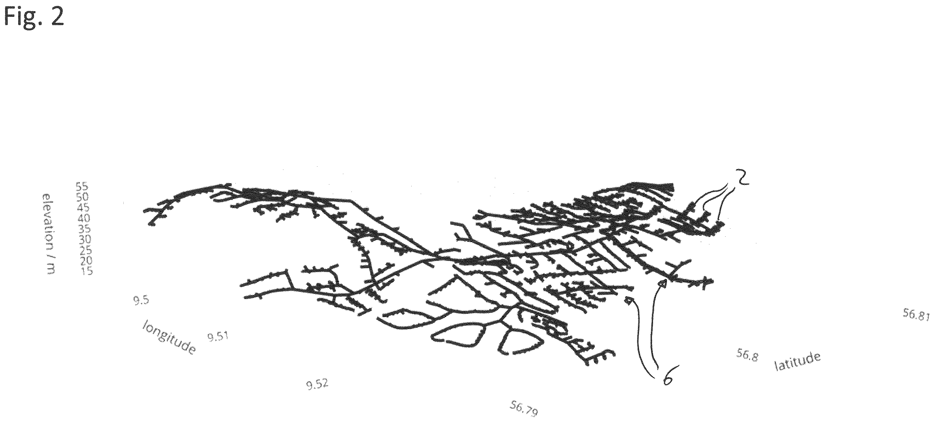

For the topology or topology data considered, the temperature detected by the heat meters 22 may be taken into consideration to compensate for the temperature dependency of the fluid density regarded in equation (2) as shown above. Furthermore, the elevation is taken into consideration. The elevation of the entire network is shown as an example in figure 2. In figure 1 for example some of the houses or consumer sites 2 are arranged at a higher location than the heating plant 4. The elevation data may be received from geographical data available on the internet, for example Google Maps. For this, the control device 24 may have a connection to the internet. Additionally, or alternatively the respective data can be stored in the control device 24 together with a map of the entire network.

The calculation of the differential pressure between forward nodes $F_1$ to $F_9$, $F_i$ and return nodes $R_1$ to $R_9$, $R_i$ allows to visualize the differential pressure over the entire network as shown in figure 3. Figure 3 shows the distribution lines 6 with a plurality of consumer sites 2 in its geographic location on a map. The differential pressure may be visualized by different colors, in this figure 3 shown by different thickness of the line representing the distribution lines 6. The differential pressures can be compared with limit values and visualized in a different color if the calculated differential pressure is below the limit. The limit may define the necessary differential pressure to ensure a secure heat supply in the network. The control device 24 may be configured to introduce further compensation factors, for example for considering different building heights of the consumer sites 2. For higher buildings the calculated differential pressure at the node at the location of the respective consumer site 2 may be reduced to ensure a necessary differential pressure even at the highest floor of the building.

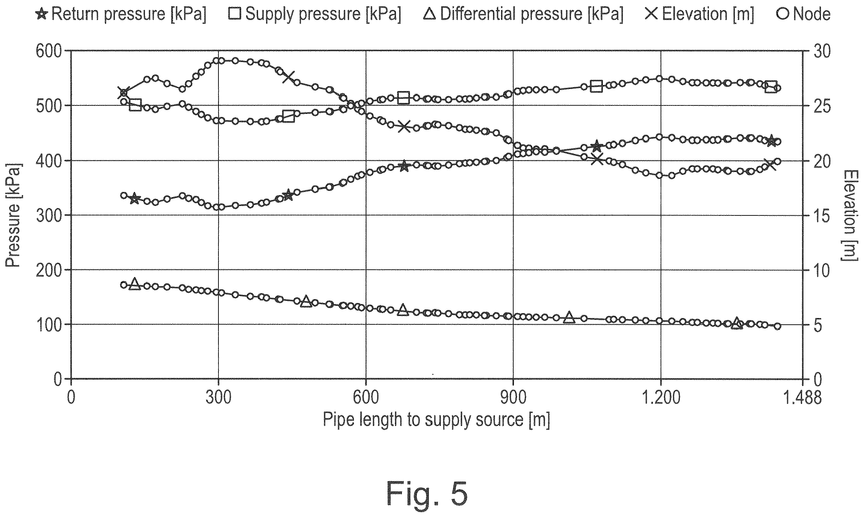

Furthermore, as shown in figure 4 it is possible to visualize the pressure along a certain distribution line 6 which in figure 4 is indicated by a thicker line. The pressure diagram shown in figure 4 and in an enlarged view in figure 5, shows certain parameters along this selected distribution line, for example the distribution line from a heat plant 4 to a selected point 32 in the network, which for example may be a point 32 at the end of a certain distribution line 6. Each circle represents one node. Figure 5 shows the derived return pressure $P_{r,i}$ and the derived forward or supply pressure $P_{f,i}$ along the pipe length starting from the heating plant 4 where the absolute pressures are detected by a first pressure sensor $P_1$ and a second pressure sensor $P_2$. Furthermore, the diagram shows the calculated differential pressure $\Delta P$ over the pipe length and the respective elevation for all the different nodes. The elevation is considered when determining the derived return pressure $P_{r,i}$ and supply or forward pressure $P_{f,i}$ which are determined on basis of the pressure values detected by a first pressure sensor $P_1$ and a second pressure sensor $P_2$ and by use of the topology of the distribution lines stored in the control device 24.

The differential pressure is as already described preferably established between two adjacent nodes. "Adjacent nodes" means nodes of forward and return pipe in close vicinity to each other, typically within 0,1 m - 10 m distance. In a typical district heating pipe which has a forward pipe and a return pipe placed side-by-side and extending in parallel in an axial direction both pipes are embedded in a common isolation material. The first and second pressure sensor would in such a situation be placed in the respective pipes with a distance of approximately 20 centimeters to each other.

List of reference numerals

| | |
|---|---|
| 2 | consumer sites, points of consumption |
| 4 | heating plant |
| 6 | distribution lines |
| 8 | forward pipes |
| 10 | return pipes |
| 12 | heat source |
| 14 | pumping device |
| 16 | heat exchanger |
| 18 | internal heating circuit |
| 20 | pump |
| 22 | heat meter |
| 24 | control device |
| 25 | sensor control unit |
| 26 | concentrator |
| 28, 30 | temperature sensors |
| 32 | point |
| $P_1$ | first pressure sensor |
| P2 | second pressure sensor |
| $F_1$-$F_9$ | nodes in the forward pipe Fi |

$R_1$-$R_9$     nodes in the return pipe $R_i$
$P_f$     detected forward pressure
$P_r$     detected return pressure
$P_{f,i}$     derived forward pressure at node i
$P_{r,i}$     derived return pressure at node i
$\Delta P_{f,r,i}$     calculated differential pressure between two nodes located at i

**Claims**

1. Network monitoring method for monitoring a heat distribution network comprising heat meters (22) and a plurality of interconnected distribution lines (6) having forward pipes (8) and return pipes (10) and comprising at least one pressure sensor ($P_1$, $P_2$) detecting a pressure in a distribution line (6),
**characterized by**

   detecting a forward pressure (Pf) at a predefined location in one of the forward pipes (8),
   receiving flow rate and/or fluid temperature information from at least one heat meter (22),
   detecting a return pressure ($P_r$) at a predefined location in one of the return pipes,
   calculating at least one differential pressure ($\Delta P_{f,r}$) between at least one forward pipe node (F, R) and one return pipe node of the distribution network on the basis of the detected forward pressure (Pf), the detected return pressure ($P_r$) and the flow rate and/or the fluid temperature

2. Network monitoring method according to claim 1, **characterized by** determining a derived forward pressure ($P_{f,i}$) in at least one or more nodes (F) on the basis of the detected forward pressure (Pf) and the topology of the heat distribution network, and calculating said at least one differential pressure ($\Delta P_{f,r}$) on the basis of the derived forward pressure ($P_{f,i}$).

3. Network monitoring method according to claim 1 or 2, **characterized by** determining a derived return pressure ($P_{r,i}$) in at least one or more node (R) on basis of the detected return pressure($P_r$) and the topology of the heat distribution network, and calculating said at least one differential pressure ($\Delta P_{f,r}$) on basis of the derived return pressure ($P_{r,i}$).

4. Network monitoring method according to one of the claims 1 to 3, **characterized in that** the least one differential pressure ($\Delta P_{f,r}$) between the at least one forward pipe node and one return pipe node (F, R) is calculated on basis of the derived forward pressure ($P_{f,i}$) and the derived return pressure ($P_{r,i}$).

5. Network monitoring method according to one of the preceding claims, **characterized in that** the at least one calculated differential pressure ($\Delta P_{f,r}$) is compared to a limit value, and that preferably an action is initiated if the differential pressure ($P_{f,r}$) is below the limit value.

6. Network monitoring system according to one of the preceding claims, **characterized in that** several differential pressures calculated for adjacent nodes (F, R) are grouped.

7. Network monitoring system according to one of the preceding claims, **characterized in that** a differential pressure ($\Delta P_{f,r}$) is calculated in a repetitive manner for the same pair of nodes (F, R) and stored over time, wherein the limit value is calculated on basis of the stored differential pressure values.

8. Network monitoring method according to one of the preceding claims, **characterized in that** the derived forward pressure ($P_{f,i}$) and/or derived return pressure ($P_{r,i}$) are determined for many nodes and preferably a differential pressure ($\Delta P_{f,r}$) is determined for many pairs of nodes (F, R), preferably for each node, representing the entire heat distribution network.

9. Network monitoring method according to one of the preceding claims, **characterized in that** the derived forward ($P_{f,i}$) and/or return pressures ($P_{r,i}$) and/or the calculated differential pressures ($\Delta P_{f,r}$) in several nodes and/or pairs of nodes (F, R) along the distribution lines (6) are visualized in a map of the heat distribution network.

10. Network monitoring method according to one of the preceding claims, **characterized in that** the topology data of the heat distribution network includes information on the hydraulic properties of the heat distribution network, in particular lengths and cross sections and/or material of the pipes of the distribution lines (6) and/or a geodetic elevation profile of the distribution lines (6), wherein the topology of the network preferably further is determined by use of a sensor unit travelling through the heat distribution lines (6) and collecting data.

11. Network monitoring method according to claim 10, **characterized in that** said elevation profile of the distribution lines (6) is obtained from online map data available on the internet, which map data are superimposed with a map of the heat distribution network.

12. Network monitoring method according to one of the preceding claims, **characterized in that** for determining the derived forward pressure ($P_{f,i}$) and/or the derived return pressure ($P_{r,i}$) in the heat distribution network a pressure loss along the heat distribution lines (6) is calculated and the derived pressure for each node is determined on basis of the calculated pressure loss and the pressure detected by a pressure sensor ($P_1$, $P_2$) at the predefined location.

13. Network monitoring method according to one of the preceding claims, **characterized in that** supply bottle necks in the heat distribution network are identified on basis of the derived forward ($P_{f,i}$) and/or return pressure ($P_{r,i}$) and/or on basis of the calculated differential pressure ($\Delta P_{f,r}$) at or between the nodes (F, R) along the distribution lines (6).

14. Network monitoring method according to one of the preceding claims, **characterized in that** at least one detected pressure (P) and/or at least one derived pressure ($P_{f,r,i}$) and/or at least one calculated differential pressure ($\Delta P_{f,r}$) are compensated by reference to a geodetic reference height.

15. Network monitoring method according to one of the preceding claims, **characterized in that** the detected forward pressure (Pf) and the detected return pressure ($P_r$) are averaged over a predetermined time and then used as averaged detected forward pressures and averaged detected return pressures for calculation of the at least one differential pressure ($\Delta P_{f,r}$).

16. Network monitoring method according to one of the preceding claims, **characterized in that** information about a differential temperature at a point of consumption (2) is obtained from the heat meter (22) and combined with information about the differential pressure at the same point.

17. Heat distribution network comprising

a plurality of interconnected distribution lines (6) having forward pipes (8) and return pipes (10) and comprising heat meters (22) and at least one pressure sensor ($P_1$, $P_2$) detecting a pressure in a distribution line (6), **characterized by**

at least one first pressure sensor (Pi)at a predefined location in one of the forward pipes (8) and being configured for detecting a forward pressure (Pf),
at least one second pressure sensor ($P_2$) at a predefined location in one of the return pipes (10) and being configured for detecting a return pressure ($P_r$),
a control device (24) connected to the at least one first and the at least one second pressure sensor ($P_1$, $P_2$),
at least one heat meter (22) configured for detecting fluid flow rates and fluid temperature and being connected to the control device (24), wherein
the control device (24) is configured for calculating at least one differential pressure ($\Delta P_{f,r}$) in at least one node (F, R) of the distribution network on basis of the detected forward pressure ($P_f$), the detected return pressure ($P_r$) and the detected fluid flow rate and/or fluid temperature.

18. Heat distribution network according to claim 17, **characterized in that** the control device (24) comprises storage means storing topology data representing the topology of the heat distribution network, and that said control device (24) is configured such that it determines at least one derived forward pressure ($P_{f,i}$) and/or at least one derived return pressure ($P_{r,i}$) in one or more nodes (F, R) within said heat distribution network on basis of the detected forward (Pf) and/or return pressure ($P_r$), the fluid flow rate and/or fluid temperature and the topology data.

19. Heat distribution network according to claim 17 or 18, **characterized in that** said control device (24) is configured such that the at least one differential pressure ($\Delta P_{f,r}$) is calculated on basis of the derived forward pressure ($P_{f,i}$) and/or the derived return pressure ($P_{r,i}$).

20. Heat distribution network according to one of the claims 17 to 19, **characterized by** a sensor device comprising at least one first pressure sensor ($P_1$) and at least one second pressure sensor ($P_2$) and being in hydraulic connection with both a forward pipe (8) and a return pipe (10) and comprising a sensor control unit (25) connected to the pressure sensors ($P_1$, $P_2$) and communicatively connected to the control device (24) for transferring sensor data from the first ($P_1$) and second sensor ($P_2$) and preferably a calculated differential pressure to the control device (24).

21. Heat distribution network according to one of the claims 17 to 20 wherein the heat meter (22) has a pressure detection arrangement to detect a forward pressure in the forward pipe and/or a return pressure in the return pipe of a service connection pipe, said pressure detection arrangement including a pressure sensor integrated in the heat meter or including an electronic interface in the heat meter connectable to a stand-alone pressure sensor.

Fig. 1

Fig. 2

Fig. 3

Search for address or serial no.

Fig. 4

EP 4 261 511 A1

Fig. 5

Europäisches Patentamt

European Patent Office

Office européen des brevets

# EUROPEAN SEARCH REPORT

**Application Number**

EP 22 16 8538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/257925 A1 (ARESTA ALESSIO [IT] ET AL) 20 October 2011 (2011-10-20) * paragraphs [0001], [0057] – [0075], [0099], [0107] – [0115], [0151], [0170] – [0180]; figures 1, 2 * ----- | 1-21 | INV. G01K17/10 ADD. G06Q50/06 G06Q10/06 |
| A | CN 204 063 276 U (TANGSHAN MODERN IND CONTR TECH) 31 December 2014 (2014-12-31) * the whole document * ----- | 1-21 | |
| A | CN 204 786 737 U (CHINA HUADIAN ENG GROUP CO LTD ET AL.) 18 November 2015 (2015-11-18) * the whole document * ----- | 1-21 | |

**TECHNICAL FIELDS SEARCHED (IPC)**

G01K

The present search report has been drawn up for all claims

| Place of search | Date of completion of the search | Examiner |
|---|---|---|
| The Hague | 30 September 2022 | Feldhoff, Roger |

EPO FORM 1503 03.82 (P04C01)

## ANNEX TO THE EUROPEAN SEARCH REPORT
## ON EUROPEAN PATENT APPLICATION NO.

EP 22 16 8538

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2022

| Patent document cited in search report | | Publication date | Patent family member(s) | | Publication date |
|---|---|---|---|---|---|
| US 2011257925 | A1 | 20-10-2011 | CA 2747383 A1 | | 01-07-2010 |
| | | | CN 102326062 A | | 18-01-2012 |
| | | | DK 2376884 T3 | | 17-08-2015 |
| | | | EA 201170869 A1 | | 28-02-2012 |
| | | | EP 2376884 A1 | | 19-10-2011 |
| | | | ES 2545086 T3 | | 08-09-2015 |
| | | | IT 1392557 B1 | | 09-03-2012 |
| | | | PL 2376884 T3 | | 30-10-2015 |
| | | | US 2011257925 A1 | | 20-10-2011 |
| | | | WO 2010073220 A1 | | 01-07-2010 |
| CN 204063276 | U | 31-12-2014 | NONE | | |
| CN 204786737 | U | 18-11-2015 | NONE | | |

EPO FORM P0459

For more details about this annex : see Official Journal of the European Patent Office, No. 12/82

EP 4 261 511 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3531368 A1